**Europäisches Patentamt**

**European Patent Office**

**Office européen des brevets**

(19)

(11) Numéro de publication: **0 224 628**
**B1**

(12)

# FASCICULE DE BREVET EUROPÉEN

(45) Date de publication du fascicule du brevet:
**20.07.88**

(21) Numéro de dépôt: **85830292.0**

(22) Date de dépôt: **26.11.85**

(51) Int. Cl.⁴: **G 01 M 3/20,** G 08 B 17/10

(54) **Circuit électronique de correction pour élément déceleur d'un appareil détecteur de fuites de gaz inflammable.**

(43) Date de publication de la demande:
**10.06.87 Bulletin 87/24**

(45) Mention de la délivrance du brevet:
**20.07.88 Bulletin 88/29**

(84) Etats contractants désignés:
**AT BE CH DE FR GB LI LU NL SE**

(56) Documents cité:
**GB-A-1 586 967**
**GB-A-2 072 852**
**US-A-3 940 753**

(73) Titulaire: **CONTROFUGAS S.R.L., Via Oriuolo 36,
I-50122 Firenze (IT)**

(72) Inventeur: **Ferraro, Roberto, via Datini 43, I-50137
Firenze (IT)**

(74) Mandataire: **Martini, Lazzaro, Ufficio Brevetti Ing.
Lazzaro Martini Via Brunelleschi, 1, I-50123
Firenze (IT)**

EP 0 224 628 B1

# 0 224 628

## Description

L'invention concerne un circuit électronique de correction pour élément déceleur d'un appareil détecteur de fuites de gas inflammable.

On connaît les appareils détecteurs de fuites de gaz inflammable qui se servent d'un ou plusieurs éléments capteurs de type à résistance ou catalytiques ou semi-conducteurs, ayant la porpriété d'offrir, au passage du courant électrique, un taux de résistance qui est fonction de la concentration de gaz dans leur entourage, et d'un circuit électrique qui décèle les variations de tenison localisée aux extrémités desdits capteurs et s'en sert pour commander la mise en action d'un circuit d'alarme et/ou d'intervention (voir GB-A-2 072 852).

L'expérience a démontré que la tension présente aux extrémités du capteur subit des variations dues non seulement à la présence de gaz mais aussi à d'autres causes, les plus importantes étant la présence de courants d'air sur le capteur lui-même, son instabilité intrinsèque provoquée par les variations de la température ambiante et par le vieillissement de l'appareil ainsi que par des phénomènes d'induction magnétique dus par exemple aux décharges athmosphériques.

Alors que l'effet d'un courant d'air sur le capteur, qui provoque un variation en sens négatif de la tension à ses extrémités, peut être minimisé en entourant le capteur d'un filet de protection métallique à mailles très serrées, au contraire, l'instabilité du capteur rend dangereuse, et partant inacceptable, l'utilisation pratique des appareils dérecteurs de gas connus sur le marché.

La présente inveniton a pour but d'éliminer cet inconvénient.

On est parvenu à ce résultat conformément à l'invention en adoptant l'idée consistant à associer au capteur un circuit de correction à même de distinguer selon leur fréquence les signaux qui se manifestent aux extrémités du capteur, en veillant à amplifier seulment ceux qui comportent des variations rapides de tension.

Il est en effet prouvé que les variations de tension aux extrémités du capteur qui sont provoquées par une fuite de gaz ont lieu en des temps brefs par rapport à celles qui sont dues au vieillissement ou à des changements de la température ambiante et en des temps plus longs par rapport à celles qui sont imputables à des interférences d'origine électromagnétique.

Les avantages obtenus grâce à la présente invention consistent essentiellement en ce qu'il est possible de garantir un fonctionnement sûr pour les appareils détecteurs de gaz inflammable avec capteur de n'importe quel type, éventuellement en signalant la cause de l'intervention qui n'est pas due à la présence de gaz, comme par ex. des courants d'air; en ce qu'elle permet un contrôle permanent de l'efficacité du capteur; en ce que ledit fonctionnement est garanti même après une utilisation prolongée et ininterrompue; en ce qu'il est possible de déceler une variation minime de tensione au capteur d'environ 5 mV; en ce que le circuit est de fabrication facile et d'application aisée sur les appareils détecteurs de fuites de gaz munis des capteurs actuellements connus; en ce qu'elle est peu encombrante et de poids fort réduit.

L'invention est exposée ci-après plus en détail l'aide de dessins représentant seulement un mode d'exécution.

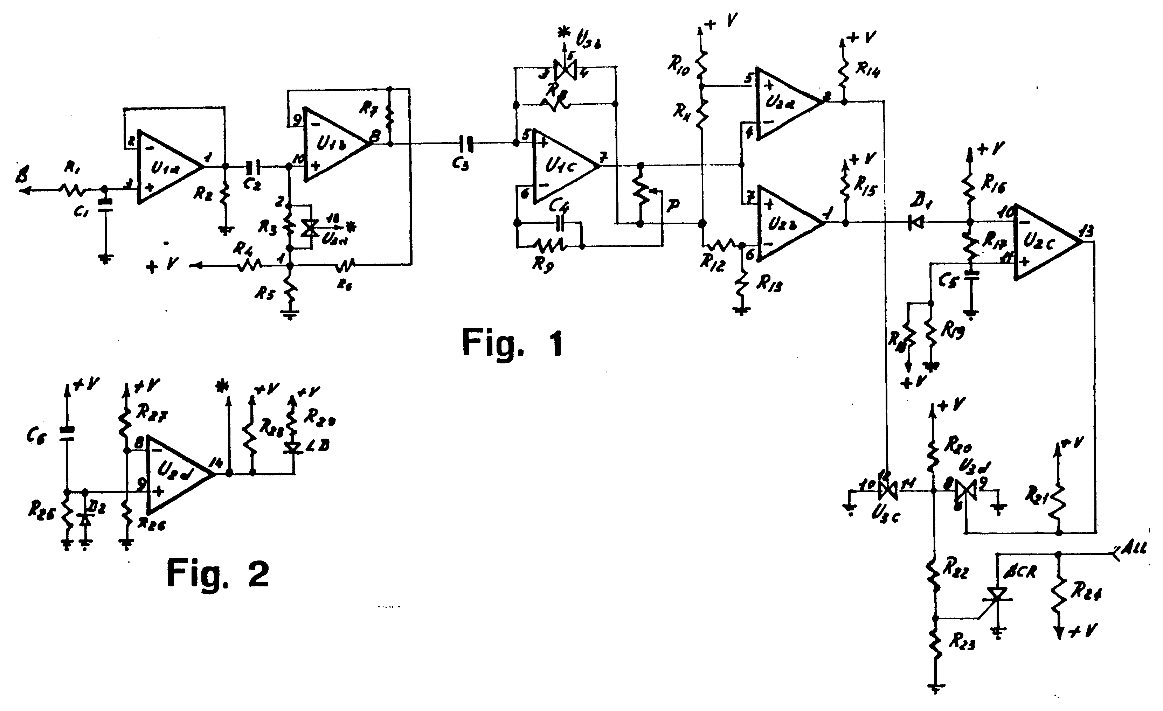

La Fig. 1 réprésente le schéma électrique d'un circuit conforme à l'invention;

la Fig. 2 représente le détail de la section du circuit auxiliaire qui a pour fonction de retarder la mise en action l'amplificateur à l'allumage au début de son fonctionnement.

Les figures représentent un circuit électronique de correction pour le capteur d'un appareil détecteur de fuites de gaz inflammable comprenant:

(a) un amplificateur de tension de type passe-bande, ayant un gain réglable de 8 à 200 fois au centre-bande et une reponse en frequence caractérisée par une fonction d'amplification ayant un pôle à environ 10 Hz et deux zéros coïncidentes à l'origine et constitué d'un circuit intégré avec trois stades, en cascade U1a,U1b,U1c, le premier à gain unitaire, les autres d'amplification, avec les condensateurs C1, C2, C3 de fuite et d'accouplement, les résistances R1, R2, R3, R4, R5, R6, R7, R8, de polarisation et de contre-réaction, un groupe de correction R9 - C4 et un potentiomètre P de réglage du gain. Le choix de la fonction d'amplification, en particulier de sa fréquence de taille inférieure, permet d'amplifier seulement les signaux qui se manifestent aux extrémités du capteur avec les caractéristiques de variabilité typiques d'une fuite de gaz, tandis que sont rejetés les signaux provoqués par d'autres causes, telles que le vieillissement à la longue du capteur, les changements le température ambiante, les intérférence d'origine électromagnétique, les variations dans le réseau d'alimentation.

(b) Un circuit comparateur de type intégré dont les trois sections U2a, U2b, U2c munies des résistances R10, R11,..........R24, d'un condensateur C5 et d'une diode contrôlée SCR, sont utilisées pour confronter la tension de sortie dudit amplificateur passe-bande avec un seuil préétabli par un partiteur composé des résistances R10, R11, R12, R13, servant à amorcer le circuit d'alarme ALL de la manière expliquée plus loin; la section U2d est utilisée pour un circuit auxiliaire ayant pour fonction de retarder la mise en action de l'amplificateur à chaque allumage afin de s'adapter à la correction du type de circuit externe utilisé.

(c) Un circuit d'interruption à commande de type "Quad Bilateral Switch" utilisé pour quatre sections U3a, U3b, U3c, U3d: l'ouverture de l'interrupteur U3c est commandée par la sortie 2 de la section U2a du circuit comparateur sus-mentionné et l'ouverture de l'interrupteur U3d est commandée par la section U2c du même circuit comparateur.

Le fonctionnement est le suivant. En position de repos la diode SCR est coupée étant donné que les interrupteurs U3c et U3d sont fermés. Le signal décelé par le capteur S dû à une fuite de gaz se manifeste au point S du circuit et est amplifié aux deux stades U1b, U1c.

2

**0 224 628**

La sortie 2 de la section U2a du comparateur commande l'ouverture de l'interrupteur U3c; la sortie 1 de la section U2b du comparateur est portée à la section U2c, laquelle, avec un retard convenu, fonction du temps de chargement du condensateur C5, provoque l'ouverture de l'interrupteur U3d. L'ouverture des interrupteurs U3c et U3d permet d'amorcer la diode SCR et partant d'amorcer le dispositif ALL d'alarme. L'ouverture retardée du contact U3d inhibe le foncitonnement de l'alarme pour un laps de temps de l'ordre d'une dizaine de secondes, en évitant ainsi la possibilité de fausses alarmes, provoquées par des signaux créés par des coups de vent sur le capteur.

**Exemple de mise en oeuvre.**

Son indiquées ci-dessous les valeurs des composantes essentielles du circuit en question, dans une des formes considérées caractéristiques pour sa mise en oeuvre:

| | | |
|---|---|---|
| U1 = LM 324 | pin 11 = $\wedge$ | pin 4 = + 5V |
| U2 = LM 339 | pin 12 = $\wedge$ | pin 3 = + 5V |
| U3 = CD 4016 B | pin 7 = $\wedge$ | pin 14 = + 5V |

+ V = + 5 Volt stabilisé

R1 = R18 = R22 = R23 = 22 K    R2 = R5 = R24 = R25 = 1 K
R3 = R8 = R9 = 680 K    R4 = 9,1 K R6 = 820 K
R7 = 5,6 M    R10 = R13 = 470
R11 = R12 = 39    R14 = R15 = 3,3 K
R16 = 220 K    R17 = 100
R19 = 39 K    R20 = R21 = R28 = 4,7 K
R25 = R27 = 47 K    R29 = 330
C1 = 4,7 µF    C2 = C3 = C5, C6 =100 µF C4 = 1nF
P = 100 K    D1 = D2 = IN 4148  SCR = BRX 49 LD = LED

**Revendications**

1. Un circuit électronique de correction pour l'élément déceleur d'un appareil détecteur des fuites de gaz inflammable caractérisé par le fait qu'il comprend:
(a) un amplificateur de tension pour signaux alternatifs de type passe-bande, pour amplifier les signaux qui se manifestent aux extrémités du capteur (S) avec des caractéristiques de variabilité typiques de la présence de gaz inflammable;
(b) un circuit comparateur permettant de comparer la tension de sortie de l'amplificateur passe-bande susmentionné avec un seuil préétabli et d'amorcer le circuit d'alarme;
(c) un circuit auxiliaire, faisant partie dudit circuit comparateur, pour retarder la mise en action de l'amplificateur à l'allumage;
(d) un circuit d'interruption à commande de type "Quad Bilateral Switch" permettant d'amorcer le dispositif d'alarme avec un retard approprié pour éviter de fausses alarmes dues à des courants d'air sur le capteur.

2. Un circuit électronique conforme à la revendication 1, caractérisé par le fait que ledit amplificateur de tension est un circuit intégré avec un stade (U1a) à gain unitaire et deux stades (U1b, U1c) d'amplification, en cascade, de type opérationnel, des condensateurs (C1, C2, C3) de fuite et d'accouplement, des résistances (R1,.........R8) de polarisation et de contre-réaction, un groupe de correction (R9 - C4) permettant une réponse en fréquence selon une fonction d'amplification ayant un pôle à environ 10 Hz et deux zéros coïncidents à l'origine, avec protection et stabilisation de fonctionnement et un potentiomètre (P) permettant un réglage du gain de 8 à 200 fois en centre-bande.

3. Un circuit électronique conforme à la revendication 1, caractérisé par le fait que ledit circuit comparateur est un circuit intégré avec trois sections (U2a, U2b, U2c) munies de résistances (R10,. ..........R24), d'une diode contrôlée (SCR) et d'un condensateur (C5) avec temps de chargement préétabli et correspondant au retard d'amorcage du dispositif (ALL) d'alarme et une section (U2d) utilisée par le circuit auxiliaire (C) sus-mentionné avec un condensateur (C6) avec temps de chargement préétabli et correspondant au retard de mise en action de l'amplificateur au début de chaque entrée en action.

4. Un circuit électronique conforme à la revendication 1, caractérisé par le fait que ledit circuit d'interruption est utlilisé pour quatre sections (U3a, U3b, U3c, U3d) avec l'ouverture de (U3c) et det (U3d) commandée prespectivement par les sections (U2a, U2c) du circuit comparateur sus-mentionné.

**Patentansprüche**

1. Ein elektronischer Entzerrungskreis für das Detektorelement eines Leckdetektorgerat für entzündbares Gas, dadurchgezeichnet dass er enthält:

(a) einen Spannungsverstärker des Bandpasstyp für Wechselsignale, um die Signale, die mit von der Anwesenheit von zündfähig Gas typischen Veränderlichkeitcharakteristiken an die Endanschlüsse des Detektorelement (S) sich ergeben, zu verstärken;

(b) einen Vergleicherkreis der die Ausgangsspannung des obenangeführten Bandpassverstärker mit einer vorbestimmten Schwelle zu vergleichen und den Alarmstromkreis einzusetzen erlaubt;

(c) einen Hilfskreis, der zu dem genannten Vergleicherkreis gehört, um die Betätigung des Verstärker an die Entfachung zu verzorgen;

(d) einen betätigten Abschaltungkreis des Typ "Quad Bilateral Switch", der die Alarmeinrichtung mit einer geeigneten Verzögerung einzusetzen erlaubt, um Fehlalarme, die durch Luftzuge auf den Detektorelement verursacht sing, zu vermeiden.

2. Ein elektronischer Kreis nach Anspruche dadurchgezeichnet daß der genannte Spannungsvertärker ein integrierter Schaltkreis ist, mit einer Stufe (U1a) mit unitären Verstärkungsfaktor und zwei Kaskadenverstärkungstufen (U1b, U1c) des Operationstyp, Verlust- und Kopplungskondensatoren (C1, C2, C3), Vorspannung und Gegenkopplungswiderstande (R1.......R8), einer Entzerrunggruppe (R9-C4), die einen Frequenzgang nach einer Verstärkungsfunktion mit einem Pol um 1C Hz ungefahr und zwei Nullen koinzidenten an dem Nullpunkt, mit Funktionierenschutz und -stabilisierung erlaubt, und einem Potentiometer (P) der einen Verstarkungsregelung von 8 bis 200 im Mittel-Band erlaubt.

3. Ein elektronischer Kreis nach Anspruch 1, dadurchgezeichnet daß der genannter Vergleicherkreis ein intergrierter Schaltkreis ist, mit drei Einzelspülen (U2a, U2b, U2c) die mit Widerstande (R10........R24), einer gesteuerten Diode (SCR) und einen Kondensator (C5) der einen vorbestimmten und der Verzogerung zur Anfachung der Alarmeinrichtung (ALL) entsprechenden Belastungzeit hat, und mit einer Einzelspplule (U2d) die mit einem Kondensator (C6) der einen vorbestimmten und der Verstärkerbetätigungsverzogerung zur jeden Entfachung ensprechenden Belastungzeit hat, bei der obenangeführten Hilfskreis (C) verwertet ist.

4. Ein elektronischer Kreis nach Ansprüch 1, dadurchgezeichnet daß der genannte Abschaltungkreis für vier Einzelspulen (U3a, U3b, U3c, U3d) verwendet ist und dass die Öffnung von (U3c) und (U3d) durch die Einzelspulen (U2a, U2c) beziehungweise gesteurt sind.

**Claims**

1. A correction electronic circuit for the transducer element of a detector device for inflammable gas losses, characterized in that it includes:

(a) a voltage amplifier for alternating signals of the bandpass type, to amplify the signals that appear at the terminals of the transducer element (S), having characteristics of variability representative of the presence of inflammable gas; (b) a comparator circuit which allows to compare the output voltage of the above-mentioned bandpass amplifier with a predetermined threshold and to excite the alarm circuit;

(c) a subsidiary circuit, forming a part of said comparator circuit, to delay the operation of the amplifier at the activation;

(d) a controlled switching-off circuit of the "Quad Bilateral Switch" type, which allows to activate the alarm device with a delay adapted to avoid spurious alarms consequiential to draughts on the transducer element.

2. An elctronic circuit according to claim 1, characterized in that said voltage amplifier is an integrated circuit with a stage (U1a) having an unitary amplification factor and two cascade amplification stages (U1b, U1c) of the operational type, straying and coupling capacitors (C1, C2, C3), biassing and reverse feedback resistors (R1,.......R8), a correction group (R9-C4) which allows a frequency response according to an amplification function having a pole at 10 Hz roughly and two zeros coincident at the origin with operation protection and stabilization and a potentionmeter (P) which allows the adjustment of the amplification factor from 8 to 200 in center-band.

3. An electronic circuit according to claim 1, characterized in that said comparator circuit is an integrated circuit with three sections (U2a, U2b, U2c) provided with resistors (R10,......R24), a controlled diode (SCR) and a capacitor (C5) having a predetermined charging time which corresponds to the alarm device (ALL) exciting delay, and with a section (U2d) used by the above-mentioned subsidiary circuit (C) with a capacitor (C6) having a predetermined charging time corresponding the delay of the operation of the amplifier at the beginning of each activation.

4. An electronic circuit according to claim 1, characterized in that said switching-off circuit is used for four sections (U3a, U3b, U3c, U3d), the opening of (U3c) and (U3d) being controlled respectively by the sections (U2a, U2c) of the above-mentioned comparator circuit.

Fig. 1

Fig. 2